# EUROPÄISCHE PATENTSCHRIFT

(11) **EP 0 914 603 B1**
(45) Veröffentlichungstag und Bekanntmachung des Hinweises auf die Patenterteilung: **13.03.2002**
(21) Anmeldenummer: 97932636.0
(22) Anmeldetag: 22.07.1997
(51) Int. Cl.: G01N 21/89

(54) **MESSSYSTEM ZUR ERKENNUNG VON OBERFLÄCHENMERKMALEN**
MEASUREMENT SYSTEM FOR SURFACE FEATURE RECOGNITION
SYSTEME DE MESURE POUR DETECTER DES CARACTERISTIQUES DE SURFACE

(30) Priorität: 23.07.1996 AT 42796 U
(43) Veröffentlichungstag der Anmeldung: 12.05.1999
(73) Patentinhaber: "MTE" Messgeräte, Entwicklungs- und Vertriebsgesellchaft mbH, 1190 Wien (AT)
(72) Erfinder: ABRAHAM, Gerhard, A-1090 Wien (AT); KROB, Wolfgang, A-2340 Mödling (AT)
(74) Vertreter: Gibler, Ferdinand, Dipl.Ing. Dr. techn.
(86) Internationale Anmeldenummer: AT9700171
(87) Internationale Veröffentlichungsnummer: WO9803854

(56) Entgegenhaltungen:
- EP-A- 0 681 183
- WO-A-91/10891
- DE-A- 2 847 935
- US-A- 3 835 332
- US-A- 5 357 335
- B. KLEINEMEIER ET AL.: "HALBLEITERSENSOREN FÜR DIE BILDERFASSUNG IN DER MATERIALBAHNINSPECTION" TECHNISCHES MESSEN TM. 1982 - 1988 INCOMPLETE., Bd. 54, Nr. 4, 1987, MUNCHEN DE, Seiten 146-154, XP002046144

## Beschreibung

Die Erfindung betrifft ein Meßsystem zur Erkennung von Oberflächenmerkmalen von auf einer Fördereinrichtung rasch bewegtem Gut, z.B. Flachglas, das eine Licht zumindest teilweise reflektierende bzw. streuende Oberfläche aufweist, wobei ein auf die reflektierende bzw. streuende Oberfläche gerichtetes, relativ zum bewegten Gut ortsfestes Sensorsystem bestehend aus einer Vielzahl von paarweise angeordneten Sender/Detektor-Elementen, vorzugsweise aus Infrarot-LED und Photodioden bzw. -transistoren vorgesehen ist, und das jeweils von einem Sender ausgestrahlte und reflektierte bzw. gestreute Licht im zugeordneten Detektor bzw. von den benachbarten Detektoren empfangen und in ein elektrisches Signal gewandelt wird, und wobei die Vielzahl von Sender/Detektor-Elementen quer zur Fördertransportrichtung des Gutes und höhenversetzt zur Fördereinrichtung entlang zumindest einer Linie angeordnet ist.

In vielen industriellen Prozessen, mit denen die Bearbeitung von schnell bewegtem Gut vorgenommen wird, ist es erstrebenswert, die einzelnen bewegten Stücke, die oft nebeneinander auf der Fördereinrichtung angeordnet sind, voneinander zu unterscheiden.

Dazu gab es bisher mehrere unterschiedliche Lösungsansätze. So konnte durch eine Bestimmung der Dimensionen des Gutes eine zufriedenstellende Identifikation erreicht werden. Die zu diesem Zweck eingesetzten CCD-Zeilenkameras weisen aber nur einen begrenzten Raumwinkel auf, den sie aufzunehmen in der Lage sind. Dazu kommen optische Verzerrungen, die auf die Meßgenauigkeit negative Auswirkungen zeigen. Für Flachglasplatten hat sich diese Methode als ungeeignet erwiesen, da die Dimensionen wie Länge und Breite nicht mit ausreichender Meßgenauigkeit bestimmt werden können. Optische Lichtschranken zur Dimensionsbestimmung haben wieder den gravierenden Nachteil, daß verschiedene Oberflächenbeschaffenheiten des Flachglases aufgrund der Lichtstreuung unterschiedliche Ergebnisse liefern.

Ein weiterer Weg, eine Identifizierung des schnell bewegten Gutes zu ermöglichen, besteht darin, die Oberflächenbeschaffenheit als unterscheidendes Merkmal anzusehen, da das Gut an dieses sehr leicht unterschieden werden kann.

Besonders viele Anwendungen und Einsatzbereiche existieren dafür etwa in der Glas herstellenden Industrie, da dort des öfteren eine Bestimmung der Oberflächenmerkmale vorgenommen werden muß, ohne daß es dabei zu einem Stillstand im Herstellungsprozeß kommt.

In der DE-A1-28 47 935 ist eine Vorrichtung zum automatischen Auffinden von Fehlern, Verschmutzungen o.ä. an transparenten Werkstoffen wie Flachglas geoffenbart, die aus einem quer zur Bewegungsrichtung des Prüflings angeordneten optischen Sender und einem entsprechenden Empfänger gebildet ist, der in parallelem Abstand zum Prüfling in Querrichtung bewegbar ist und sich dabei entweder in Transmissions- oder in Reflexionsstellung gegenüber dem Sender befindet. Der optische Empfänger ist aus einer Reihe von Meßzellen zusammengesetzt und bewegt sich während der Vorschubbewegung des Prüflings, wobei sich die Anzahl der Meßzellen nach der Vorschubgeschwindigkeit richtet. Es findet eine Abtastung der Oberfläche statt, mit der selbst kleinste Fehler oder Verschmutzungen feststellbar sind.

Der optische Sender ist in Form einer konstanten, über die gesamte Breite einer Flachglasscheibe einheitlich wirksamen Strahlungsquelle ausgebildet, die die sich vorbeibewegende Flachglasscheibe durchleuchtet. Auf deren anderer Seite befindet sich der optische Empfänger, der aus mehreren Meßzellen zusammengesetzt und mit sehr hoher Geschwindigkeit quer zur Transportrichtung der Flachglasscheibe bewegbar ist. Tritt während der Bewegung des Empfängers eine Fehlerstelle auf, wird ein veränderter Meßwert empfangen. Diese Abweichung wird in ein elektrisches Signal umgesetzt und dadurch eine Signallampe zum Leuchten gebracht.

Insbesondere zur Identifikation auftragsbezogen zugeschnittener Flachglasplatten ist neben anderer Parameter die Erkennung von Oberflächenmerkmalen erforderlich, die diese nach den verschiedenen Fertigungsprozessen aufweisen.

Sollen Flachglasplatten beispielsweise einem Härtungsprozeß unterzogen werden, so müssen sie nach dem Zuschnitt und einer eventuellen Oberflächenbeschichtung den Härtungsofen durchlaufen. Aufgrund der hohen Prozeßtemperatur ist dabei eine Etikettierung der Glasplatten nicht möglich. Da die Kapazität des Härtungsofens bestmöglichst ausgenutzt werden soll, werden üblicherweise mehrere Platten unterschiedlicher Form gleichzeitig durch den Härtungsofen befördert.

Nach dem Auslauf aus dem Ofen können die Platten hinsichtlich der Oberflächenmerkmale identifiziert und den entsprechenden Auftragsdaten zugeordnet werden. Da sich die Platten einer Härtungscharge oft nur geringfügig in den äußeren Formen unterscheiden, ist die Fehlerwahrscheinlichkeit bei einer Identifikation durch Bestimmung der Abmessungen nach dem Auslauf relativ hoch. Daher wird versucht, über die Obrflächenmerkmale ein zusätzliches unterscheidendes Kriterium zu erfassen.

Als Oberflächenmerkmale kommen dabei Beschichtungen, Oberflächenstrukturen, Markierungen, z.B. Strichcodes, usw. in Betracht. Diese sind aber aufgrund der hohen Geschwindigkeiten, mit denen das Gut zum Teil bewegt wird, mit bisher bekannten Mitteln nur sehr schwer zu erkennen. Zusätzlich kann es notwendig sein, Fehler an der Oberfläche zu erkennen, z.B. Ausbrüche, die vor allem im Bereich der Kanten auftreten.

Dazu ist aus der US-PS-3 835 332 eine Vorrichtung zur Detektion von Produktionsfehlern in einer Bahn, z.B. einer Filmbahn, bekanntgeworden. Ein quer zur Bewegungsrichtung einer Endlos-Filmbahn angeordneter Balken ist dabei mit nebeneinander angeordneten Leuchtdioden ausgestattet, die pulsartiges Licht aussenden, welches von jeweils gegenüberliegenden Photodetektoren aufgenommen und in einen digitalen Kode gewandelt wird, der die Intensität des detektierten Lichtes darstellt. Die Detektoren können dabei entweder in Transmissions- oder in Reflexionsstellung angeordnet sein. Auf diese Weise kann etwa ein photographischer Film auf Fehlerstellen oder Ungenauigkeiten in der Filmdicke untersucht werden. Die Leuchtdioden werden in sich ständig wiederholender Abfolge nacheinander für kurze Intervalle zum Leuchten gebracht und das reflektierte oder durch die Bahn hindurchgehende Licht detektiert und gespeichert. Die aufgezeichneten Daten werden mit den in einem Kalibriervorgang gewonnenen Referenzwerten verglichen, um Defekte in der Bahn oder in der Bahnbeschichtung feststellen zu können.

Durch die sequentielle, pulsförmige Ansteuerung der Leuchtdioden findet eine Abtastung entlang des quer zur Bewegungsrichtung angeordneten Balkens statt, wobei die den Leuchtdioden zugeordneten Detektoren die reflektierten oder durch die Bahn hindurchgehenden Lichtpulse empfangen und in elektrische Signale umwandeln. Diese werden von einem Analog-Digital-Wandler in Abhängigkeit von der Intensität nacheinander einem Kode zugeordnet, der digital weiterverarbeitbar ist.

Aufgabe der Erfindung ist es daher, ein Meßsystem der eingangs genannten Art anzugeben, mit dem eine Erkennung von Oberflächenmerkmalen auch bei sehr hohen Fördergeschwindigkeiten realisierbar ist.

Weitere Aufgabe ist es, eine hohe Auflösung und Erkennungsgeschwindigkeit der Oberflächenmerkmale zu erzielen.

Eine weitere Aufgabe der Erfindung ist es, eine gleichzeitige Erkennung von Oberflächenmerkmalen von in Transportrichtung nebeneinander liegenden Platten zu ermöglichen.

Erfindungsgemäß wird dies dadurch erreicht, daß jeder Detektorausgang mit jeweils einer Vorrichtung zur Erfassung der Intensität des Detektorsignals verbunden ist, sodaß die bei gleichzeitiger Ausstrahlung aller Sender-Elemente empfangenen Intensitätssignale aller Detektoren einer Auswertevorrichtung parallel und gleichzeitig zuführbar sind.

Über die parallele Auswertung der Intensitäten des von der Gut-Oberfläche reflektierten bzw. gestreuten Lichtes kann auf deren Oberflächenmerkmale geschlossen werden, wodurch eine einfachere Identifikation und Zuordnung des Gutes auch bei sehr hohen Geschwindigkeiten möglich wird. Auf diese Weise können z.B. Oberflächenbeschichtungen und Strukturierungen der Oberfläche aber auch Fehler wie Kantenausbrüche mit hoher Genauigkeit erkannt werden.

In weiterer Ausbildung der Erfindung kann vorgesehen sein, daß jeweils benachbarte Sender/Detektor-Elemente in geringem Abstand zueinander, vorzugsweise aneinanderstoßend, angeordnet sind, wodurch sich die Auflösung der Messung und damit die Reproduzierbarkeit der Meßergebnisse erhöht.

Besonders bevorzugt ist eine Ausbildung der Erfindung, in der das linear angeordnete Sensorsystem sich über die gesamte Breite der Fördereinrichtung erstreckt. Auf diese Weise können sämtliche auf der Fördereinrichtung bewegten Werkstücke erfaßt werden.

Gemäß einer weiteren Variante der Erfindung kann vorgesehen sein, daß das linear angeordnete Sensorsystem über eine Vorrichtung zur Höheneinstellung höhenverstellbar ist.

Dadurch kann das erfindungsgemäße Meßsystem auf das jeweilige bewegte Gut so abgestimmt werden, daß die Detektoren maximale Intensität des reflektierten bzw. gestreuten Lichtes empfangen können. Üblicherweise wird die Höhe so verstellt, daß ein konstanter Abstand zur Gutoberfläche gewährleistet ist.

Gemäß einer weiteren Variante der Erfindung kann vorgesehen sein, daß die Vielzahl von Sender/Detektor-Elementen entlang zweier paralleler, voneinander beabstandeter Linien angeordnet ist, wobei für jeweils ein Sender/Detektor-Element der einen Linie ein entsprechendes Sender/Detektor-Element der anderen Linie vorgesehen ist.

Durch eine solche Anordnung können die Oberflächenmerkmale zweimal zeitlich hintereinander detektiert werden, was zum einen zur Mittelwertbildung der Meßwerte herangezogen, wodurch die Meßsicherheit erhöht wird, und zum andern auch für eine Geschwindigkeitsmessung des bewegten Gutes verwendet werden kann. Es kann dabei aber auch eine unterschiedliche Anzahl von Sender/Detektor-Elementen in den beiden Linien vorgesehen sein.

Weitere Aufgabe der Erfindung ist es, ein Verfahren zur Erkennung von Oberflächenmerkmalen von auf einer Fördereinrichtung rasch bewegtem Gut anzugeben, das eine Licht zumindest teilweise reflektierende bzw. streuende Oberfläche aufweist, wobei die Intensitäten einer Vielzahl entlang zumindest einer quer zur Transportrichtung des Gutes verlaufenden Linie, von der Oberfläche des Gutes reflektierten bzw. gestreuten Lichtstrahlen gemessen werden, und mit dem eine hohe Meßsicherheit und Genauigkeit erzielbar ist.

Erfindungsgemäß wird dies dadurch erreicht, daß die Vielzahl an Lichtstrahlen gleichzeitig ausgesandt werden, daß die Intensitäten der reflektierten bzw. gestreuten Lichtstrahlen gleichzeitig gemessen werden, und daß aus dem Verlauf der reflektierten bzw. gestreuten Intensitäten entlang der quer zur Transportrichtung verlaufenden Linie die Oberflächenmerkmale des bewegten Gutes bestimmt werden.

Dadurch können die Oberflächenmerkmale auch sehr schnell sich bewegenden Gutes exakt bestimmt und zur Identifikation herangezogen werden.

In weiterer Ausbildung der Erfindung kann vorgesehen sein, daß die Intensitäten entlang zweier paralleler, beabstandeter Linien gemessen werden, und die Meßwerte gleichwertiger Sender/Detektor-Elemente miteinander verglichen werden bzw. aus deren zeitlichen Aufeinanderfolge die Geschwindigkeit des bewegten Gutes bestimmt wird.

Die Meßwerterfassung kann auf diese Weise verbessert sowie durch die Detektion zweier gleicher Strukturierungen, Beschichtungen, Oberflächenfehler od. dgl. die Geschwindigkeit des Gutes bestimmt werden, sodaß auch genaue Aussagen über die Längendimensionen des jeweiligen vorbei bewegten Gutes getroffen werden können.
Die Erfindung wird anhand der in den beigeschlossenen Zeichnungen dargestellten Ausführungsbeispiele eingehend erläutert. Es zeigt dabei
Fig.1 eine perspektivische Seitenansicht einer Ausführungsform des erfindungsgemäßen Meßsystems;
Fig.2 einen Schnitt quer zur Fördertransportrichtung der Fördereinrichtung einer Ausführungsform des erfindungsgemäßen Meßsystems;
Fig.3 einen Längsschnitt durch das Sensorsystem einer Ausführungsform des erfindungsgemäßen Meßsystems;
Fig.4 eine schematische Darstellung und ein Diagramm des Intensitätsverlaufes zweier verschiedener Oberflächenbeschaffenheiten entlang der Linie von Lichtpunkten und
Fig.5 einen Längsschnitt durch das Sensorsystem einer weiteren Ausführungsform des erfindungsgemäßen Meßsystems.

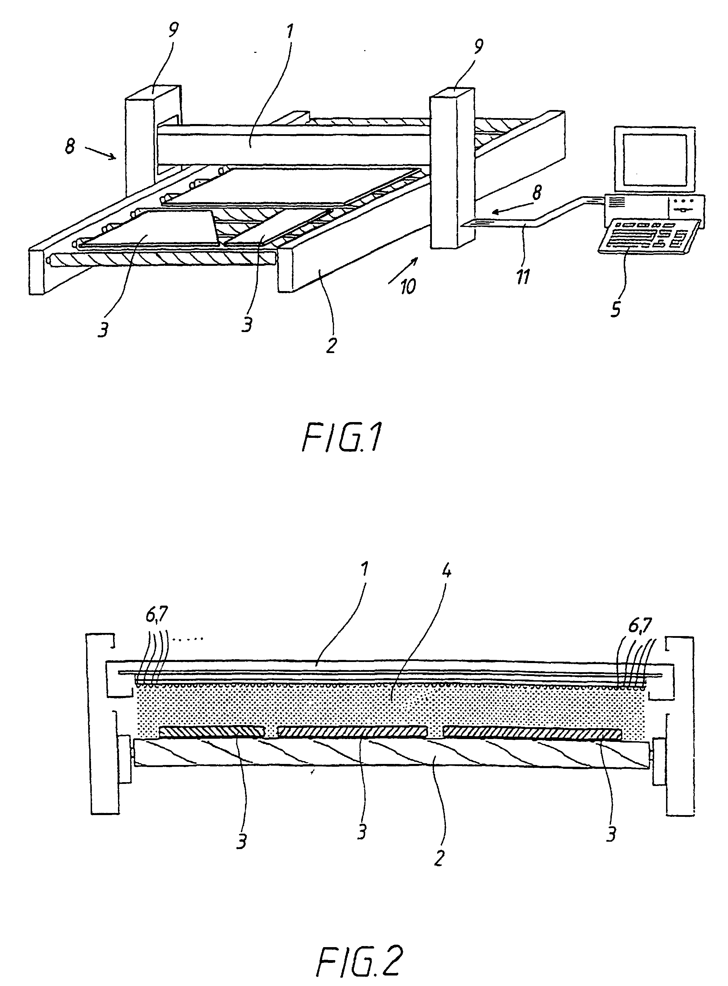

In Fig.1 ist die Gesamtansicht eines Meßsystems dargestellt, welches die berührungslose Messung von Oberflächenmerkmalen von auf einer Fördereinrichtung 2 rasch bewegtem Gut 3 ermöglicht. Das geförderte Gut ist in diesem Ausführungsbeispiel Flachglas, das eine Licht zumindest teilweise reflektierende bzw. streuende Oberfläche aufweist und auf einer als Rollenbahn 2 ausgebildeten Fördereinrichtung von einer Stufe des Herstellungsprozesses zur nächsten bewegt wird. Als Gut können auch beliebig andere reflektierende bzw. streuende Materialien zum Einsatz gelangen.

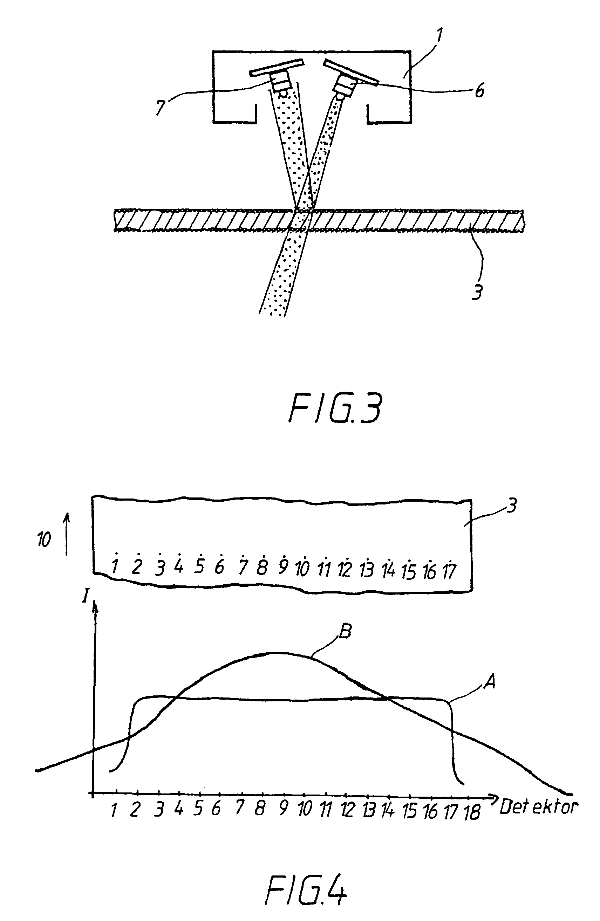

Auf die reflektierende bzw. streuende Oberfläche des rasch bewegten Gutes 3, ist erfindungsgemäß ein relativ zum bewegten Gut 3 ortsfestes Sensorsystem 1 bestehend aus einer Vielzahl von paarweise angeordneten Sender/Detektor-Elementen 6,7, vorzugsweise aus Infrarot-LED und Photodioden bzw. -transistoren, gerichtet, wobei das jeweils von einem Sender 6 ausgestrahlte und an der Gutoberfläche reflektierte bzw. gestreute Licht im zugeordneten Detektor 7 bzw. in den benachbarten Detektoren 7 empfangen und von diesen in ein entsprechendes elektrisches Signal gewandelt wird (Fig.3).

Dazu sei erwähnt, daß sich die Erfindung keineswegs auf die genannten Arten von Sendern und Detektoren beschränkt, sondern vielmehr alle entsprechend geeigneten, z.B. Laser-Dioden, aller Wellenlängenbereiche mit umfaßt.

Die Vielzahl von Sender/Detektor-Elementen 6,7 ist quer zur Fördertransportrichtung 10 des Gutes 3 und höhenversetzt zur Förderebene der Rollenbahn 2 entlang einer Linie angeordnet. Es können aber auch mehrere dieser linienförmigen Anordnungen im erfindungsgemäßen Meßsystem vorgesehen sein. Jeder Detektorausgang ist dabei mit jeweils einer nicht dargestellten Vorrichtung zur Erfassung der Intensität des Detektorsignals, z.B. einem Analog/Digital-Wandler, verbunden, sodaß die Intensitätssignale aller Detektoren 7 über eine Meßleitung 11 einer Auswertevorrichtung 5, z.B. einem PC, parallel zuführbar sind. Die Sender 6 und Detektoren 7 sind dabei in einer über den Walzen 2 der Rollenbahn angeordneten, und von beidseitigen Stützen 8 getragenen Brücke 1 untergebracht und erzeugen aufgrund ihrer dichten Anordnung einen Lichtvorhang 4.

Eine beispielhafte, die Erfindung keineswegs einschränkende Realisierung für eine 2,5 m breite Fördereinrichtung besteht darin, 70 Mikroprozessoren mit je 32 parallelen A/D-Eingängen zur Meßwertaufbereitung vorzusehen, die die parallelen Daten der Auswertevorrichtung 5 zuführen.

Dabei ist hervorzuheben, daß im Unterschied zum Stand der Technik keine nacheinanderfolgende Abtastung der einzelnen Detektorausgänge erfolgt, sondern für jede Messung die Signale aller Detektoren 7 gleichzeitig vorliegen.

Mit dem erfindungsgemäßen Meßsystem ist das erfindungsgemäße Verfahren umsetzbar, welches darin besteht, daß die Intensitäten einer Vielzahl entlang einer quer zur Transportrichtung verlaufenden Linie, von der Oberfläche reflektierten bzw. gestreuten Lichtstrahlen gleichzeitig gemessen werden, und daß aus dem Verlauf der reflektierten bzw. gestreuten Intensitäten entlang der quer zur Transportrichtung verlaufenden Linie die Oberflächenmerkmale des bewegten Gutes 3 bestimmt werden.

Aus Fig.4 ist dazu eine schematische Darstellung zu ersehen, in der beispielhaft von achtzehn entlang einer Linie angeordneten Lichtstrahlen auf der bewegten Gutoberfläche erzeugte Aurtreffpunkte 1 bis 18 veranschaulicht sind, von denen aus die reflektierten bzw. gestreuten Strahlen in die Detektoren gelangen. Durch die parallele Meßauswertung der Intensitäten, das heißt durch die gleichzeitige Erfassung aller achtzehn entstehenden reflektierten bzw. gestreuten Intensitäten, die teilweise auch durch Überlagerungen in verschiedene Winkel gestreuter Lichtstrahlen entstehen können, kann deren Abhängigkeit entlang dieser Linie, wie in Fig.4 dargestellt, wiedergegeben werden, wobei aus dem Verlauf auf die Oberflächenmerkmale Rückschlüsse gezogen werden können. So stammt der Verlauf A z.B. von gut reflektierenden, glatten Flachgläsern und die Kurve B von diffus streuenden, rauhen Flachgläsern. Damit können unterschiedlich behandelte Flachgläser während des Transports von einer Anlage zur nächsten wirkungsvoll voneinander unterschieden werden, ohne daß dazu ein manuelles Begutachten erforderlich wäre. Zusätzlich muß zur Meßwerterfassung keine Reduktion der Fördergeschwindigkeit vorgenommen werden, wodurch es auch zu keiner Verlangsamung oder zu einem Stau des beförderten Gutes kommen kann.

Aus der Kurve B ist auch ersichtlich, warum Lichtschrankenlösungen für die Bestimmung der Dimensionen von Flachgläsern nur beschränkt geeignet sind. Aufgrund der Streuung verschmiert die optisch ermittelte Kante des bewegten Gutes, wodurch keine zuverlässige Ja/Nein-Aussage hinsichtlich der Intensität und somit über die Abmessungen ermöglicht wird. Die erfindungsgemäße Auswertung der Detektorsignale ermöglicht neben der Erkennung von Oberflächenmerkmalen zusätzlich eine genauere Bestimmung der Dimensionen des Gutes als dies mit bisher bekannten Verfahren möglich ist.

Um eine möglichst gute Auflösung zu erzielen, sind jeweils benachbarte Sender/Detektor-Elemente 6, 7 in geringem Abstand zueinander, vorzugsweise aneinanderstoßend, angeordnet.

So kann bei entsprechend platzsparender Anordnung von derzeit handelsüblichen Sendern 6 und Detektoren 7 mit diesen eine Auflösung der Intensitätsmessung von bis 1 mm erzielt werden, wobei für übliche Dimensionen die Sender/Detektorenpaare auf eine relativ hohe Anzahl anwächst. Eine Verkleinerung der Sender- bzw. Detektorenmaße hat naturgemäß eine Erhöhung der Auflösung zur Folge.

Weiters verfügt das linear angeordnete Sensorsystem 1 über eine Vorrichtung zur Höheneinstellung 9, mit der es höhenverstellbar ist. Dadurch kann über eine entsprechende Abgleichvorrichtung die Brücke 1 mit der Vielzahl von Sendern 6 und Detektoren 7 solange in ihrer Höhe eingestellt werden bis sich etwa ein relatives Maximum des Detektorausgangssignales oder bis sich immer ein vorbestimmter Abstand zur Gutoberfläche einstellt.

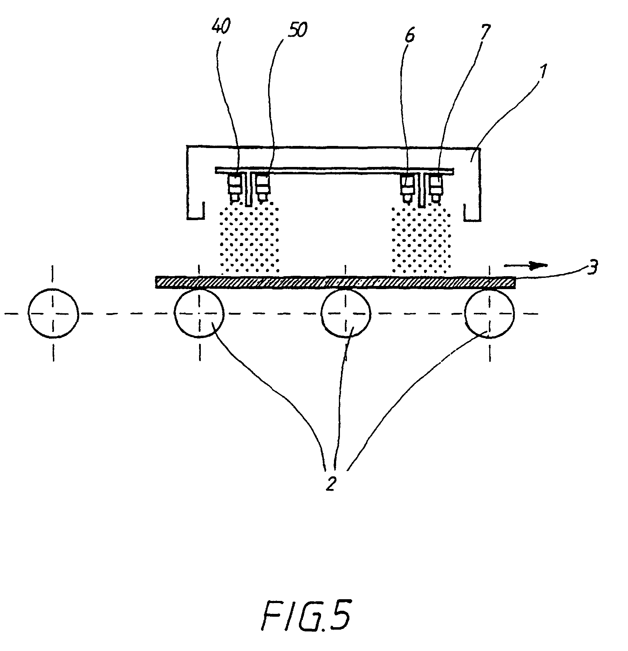

In Fig. 5 ist eine weitere erfindungsgemäße Variante dargestellt, in der eine Vielzahl von Sender/Detektor-Elementen 6, 7; 40, 50 entlang zweier paralleler, voneinander beabstandeter Linien angeordnet ist, wobei für jeweils ein Sender/Detektor-Element 6, 7 der einen Linie ein entsprechendes Sender/Detektor-Element 40, 50 der anderen Linie vorgesehen ist. Ein Oberflächenmerkmal, welches mittels des Detektors 50 der ersten Linie festgestellt worden ist, wird somit beim entsprechenden Detektor 7 der zweiten Linie um eine von der Fördergeschwindigkeit abhängige Zeitversetzung später festgestellt. Als Merkmal kann die Beschichtung, die jeweils durch einen vorhergehenden Prozeß entstandene Struktur, z.B. ein Ornament, aber auch Fehler, Kantenausbrüche, die beim Schneiden oder Brechen der Flachglasplatten entstanden sind, oder ein Strichcode mit entsprechend der Auflösung breit beabstandeten Einzelstrichen dienen.

Es werden die Intensitäten entlang der zwei parallel, beabstandeten Linien gemessen und die Meßwerte gleichwertiger Sender/Detektor-Elemente 6,7;40, 50 miteinander verglichen bzw. aus deren zeitlichen Aufeinanderfolge die Geschwindigkeit des bewegten Gutes bestimmt.

## Patentansprüche

1. Meßsystem zur Erkennung von Oberflächenmerkmalen von auf einer Fördereinrichtung (2) rasch bewegtem Gut (3), z.B. Flachglas, das eine Licht zumindest teilweise reflektierende bzw. streuende Oberfläche aufweist, wobei ein auf die reflektierende bzw. streuende Oberfläche gerichtetes, relativ zum bewegten Gut (3) ortsfestes Sensorsystem (1) bestehend aus einer Vielzahl von paarweise angeordneten Sender/Detektor-Elementen (6,7), vorzugsweise aus Infrarot-LED und Photodioden bzw. -transistoren vorgesehen ist, und das jeweils von einem Sender (6) ausgestrahlte und reflektierte bzw. gestreute Licht im zugeordneten Detektor (7) bzw. von den benachbarten Detektoren (7) empfangen und in ein elektrisches Signal gewandelt wird, und wobei die Vielzahl von Sender/Detektor-Elementen (6, 7) quer zur Fördertransportrichtung (10) des Gutes (3) und höhenversetzt zur Fördereinrichtung (2) entlang zumindest einer Linie angeordnet ist, **dadurch gekennzeichnet, daß** jeder Detektorausgang mit jeweils einer Vorrichtung zur Erfassung der Intensität des Detektorsignals verbunden ist, sodaß die bei gleichzeitiger Ausstrahlung aller Sender-Elemente (6) empfangenen Intensitätssignale aller Detektoren (7) einer Auswertevorrichtung (5) parallel und gleichzeitig zuführbar sind.

2. Meßsystem nach Anspruch 1, **dadurch gekennzeichnet, daß** jeweils benachbarte Sender/Detektor-Elemente (6, 7) in geringem Abstand zueinander, vorzugsweise aneinanderstoßend, angeordnet sind.

3. Meßsystem nach Anspruch 1 oder 2, **dadurch gekennzeichnet, daß** das linear angeordnete Sensorsystem sich über die gesamte Breite der Fördereinrichtung (2) erstreckt.

4. Meßsystem nach Anspruch 1, 2 oder 3, **dadurch gekennzeichnet, daß** das linear angeordnete Sensorsystem (1) über eine Vorrichtung zur Höheneinstellung (9) höhenverstellbar ist.

5. Meßsystem nach einem der vorhergehenden Ansprüche, **dadurch gekennzeichnet, daß** die Vielzahl von Sender/Detektor-Elementen (6, 7; 40, 50) entlang zweier paralleler, voneinander beabstandeter Linien angeordnet ist, wobei für jeweils ein Sender/Detektor-Element (6, 7) der einen Linie ein entsprechendes Sender/Detektor-Element (40, 50) der anderen Linie vorgesehen ist.

6. Verfahren zur Erkennung von Oberflächenmerkmalen von auf einer Fördereinrichtung rasch bewegtem Gut (3), das eine Licht zumindest teilweise reflektierende bzw. streuende Oberfläche aufweist, wobei die Intensitäten einer Vielzahl entlang zumindest einer quer zur Transportrichtung (10) des Gutes (3) verlaufenden Linie, von der Oberfläche des Gutes (3) reflektierten bzw. gestreuten Lichtstrahlen gemessen werden, **dadurch gekennzeichnet, daß** die Vielzahl an Lichtstrahlen gleichzeitig ausgesandt werden, daß die Intensitäten der reflektierten bzw. gestreuten Lichtstrahlen gleichzeitig gemessen werden, und daß aus dem Verlauf der reflektierten bzw. gestreuten Intensitäten entlang der quer zur Transportrichtung (10) verlaufenden Linie die Oberflächenmerkmale des bewegten Gutes (3) bestimmt werden.

7. Verfahren nach Anspruch 6, **dadurch gekennzeichnet, daß** die Intensitäten entlang zweier paralleler, beabstandeter Linien gemessen werden, und die Meßwerte gleichwertiger Sender/Detektor-Elemente (6,7;40, 50) miteinander verglichen werden bzw. aus deren zeitlichen Aufeinanderfolge die Geschwindigkeit des bewegten Gutes (3) bestimmt wird.

## Claims

1. A measurement system for surface feature recognition of a material (3) such as flat glass which is rapidly moving on a conveying device (2) and comprises a surface which reflects or scatters the light at least in part, with a sensor system (1) which is stationary relative to the moved material (3) and is directed against the reflecting or scattering surface being provided which consists of a plurality of transmitter/detector elements (6, 7), preferably of infrared LED and photodiodes or phototransistors, which are arranged in pairs, and the light which is emitted by a transmitter (6) or reflected and scattered being received in the associated detector (7) or by the adjacent detectors (7) and being converted into an electric signal, and with the plurality of transmitter/detector elements (6, 7) being disposed transversally to the conveying direction (10) of the material (3) and offset in height to the conveyor device (2) along at least one line, **characterized in that** each detector output is connected to one apparatus for detecting the intensity of the detector signal, so that the intensity signals of all detectors (7) received in the case of the simultaneous transmission of all transmitter elements (6) can be supplied in parallel and simultaneously to an evaluation apparatus (5).

2. A measurement system as claimed in claim 1, **characterized in that** mutually adjacent transmitter/detector elements (6, 7) are disposed at a small distance from one another, preferably abutting one another.

3. A measurement system as claimed in claim 1 or 2, **characterized in that** the linearly disposed sensor system extends over the entire width of the conveyor device (2).

4. A measurement system as claimed in claim 1, 2 or 3, **characterized in that** the linearly disposed sensor system (1) is height-adjustable by means of an apparatus (9) for adjusting the height.

5. A measurement system as claimed in one of the preceding claims, **characterized in that** the plurality of transmitter/detector elements (6, 7; 40, 50) is disposed along two parallel, mutually spaced lines, with a transmitter/detector element (6, 7) each of the one line being provided for a respective transmitter/detector element (40, 50) of the other line.

6. A method for surface feature recognition of a material (3) which is rapidly moving on a conveying device and comprises a surface which reflects or scatters the light at least in part, with the intensities of a plurality of light beams which are reflected or scattered from the surface of the material (3) being measured along at least one line extending transversally to the conveying direction (10) of the material (3), **characterized in that** the plurality of light beams are emitted simultaneously, the intensities of the reflected or scattered light beams are measured simultaneously, and the surface features of the moved material (3) are determined from the course of the reflected or scattered intensities along the line extending transversally to the conveying direction (10).

7. A method as claimed in claim 6, **characterized in that** the intensities are measured along two parallel, spaced lines and the measured values of equivalent transmitter/detector elements (6,7; 40, 50) are compared with one another and the speed of the moved material (3) is determined from their sequence in time.

## Revendications

1. Système de mesure pour la reconnaissance de caractéristiques de surface d'un article (3) se déplaçant rapidement sur un dispositif de transport (2), par exemple de verre plat, qui présente une surface réfléchissant ou dispersant au moins partiellement la lumière, dans lequel il est prévu un système de capteurs (1) stationnaire par rapport à l'article déplacé (3) et orienté vers la surface réfléchissante ou dispersante, composé d'une pluralité d'éléments émetteurs/détecteurs (6, 7) disposés par paires, de préférence de diodes infrarouges et de photodiodes ou phototransistors, et la lumière émise par un émetteur (6) et réfléchie ou dispersée est captée par le détecteur (7) correspondant ou les détecteurs (7) voisins et transformée en un signal électrique, et dans lequel la pluralité d'éléments émetteurs/détecteurs (6, 7) est disposée le long d'au moins une ligne perpendiculaire au sens de transport (10) de l'article (3) et décalée en hauteur par rapport au dispositif de transport (2), **caractérisé en ce que** chaque sortie de détecteur communique avec un dispositif de détection de l'intensité du signal de détecteur, de sorte que les signaux d'intensité de tous les détecteurs (7) reçus en cas d'émission simultanée de tous les éléments émetteurs (6) puissent être acheminés simultanément en parallèle.

2. Système de mesure selon la revendication 1, **caractérisé en ce que** les éléments émetteurs/détecteurs (6, 7) contigus sont disposés à peu de distance les uns des autres, de préférence accolés.

3. Système de mesure selon la revendication 1 ou 2, **caractérisé en ce que** le système de capteurs disposé en ligne s'étend sur toute la largeur du dispositif de transport (2).

4. Système de mesure selon la revendication 1, 2 ou 3, **caractérisé en ce que** le système de capteurs (1) disposé sur une ligne est réglable en hauteur à l'aide d'un mécanisme de réglage en hauteur (9).

5. Système de mesure selon l'une quelconque des revendications précédentes, **caractérisé en ce que** la pluralité d'éléments émetteurs/détecteurs (6, 7 ; 40, 50) est disposée sur deux lignes parallèles et écartées l'une de l'autre, un élément émetteur/détecteur (6, 7) de la première ligne correspondant à chaque élément émetteur/détecteur (40, 50) de l'autre ligne.

6. Procédé de reconnaissance de caractéristiques de surface d'un article (3) se déplaçant rapidement sur un dispositif de transport et présentant une surface réfléchissant ou dispersant au moins partiellement la lumière, dans lequel l'intensité d'une pluralité de faisceaux lumineux réfléchis ou dispersés par la surface de l'article (3) le long d'au moins une ligne perpendiculaire au sens de transport (10) de l'article (3) est mesurée, **caractérisé en ce que** la pluralité de faisceaux lumineux est émise simultanément, **en ce que** l'intensité des faisceaux lumineux réfléchis ou dispersés est mesurée simultanément, et **en ce que** l'évolution de l'intensité réfléchie ou dispersée le long de la ligne perpendiculaire au sens de transport (10) permet de déterminer les caractéristiques de surface de l'article (3) déplacé.

7. Procédé selon la revendication 6, **caractérisé en ce que** les intensités sont mesurées le long de deux lignes parallèles distantes, et les valeurs de mesure d'éléments émetteurs/détecteurs (6, 7 ; 40,50) de même valeur sont comparées entre elles et leur succession dans le temps permet de déterminer la vitesse de l'article (3) déplacé.
